# EUROPÄISCHE PATENTSCHRIFT

(11) **EP 4 257 661 B1**
(45) Veröffentlichungstag und Bekanntmachung des Hinweises auf die Patenterteilung: **25.12.2024**
(21) Anmeldenummer: 22166569.8
(22) Anmeldetag: 04.04.2022
(51) Int. Cl.: C10L 5/36, C10L 5/44, C10L 9/08, C01B 32/324, C01B 32/336

(54) **VERFAHREN ZUR HERSTELLUNG VON AKTIVKOHLE**
PROCESS FOR THE PREPARATION OF ACTIVATED CARBON
PROCÉDÉ DE FABRICATION DE CHARBON ACTIF

(43) Veröffentlichungstag der Anmeldung: 11.10.2023
(73) Patentinhaber: Inkoh Holding AG, 7302 Landquart (CH)
(72) Erfinder: WILLI, Gion, 7304 Maienfeld (CH)
(74) Vertreter: Troesch Scheidegger Werner AG

(56) Entgegenhaltungen:
- DE-A1- 102020 120 741
- HAMMOND JIM ET AL: "Herstellung von Pflanzenkohle mittels Pyreg-Technologie", ITHAKA - JOURNAL FÜR ÖKOLOGIE, WEINBAU UND KLIMAFARMING, 17 January 2013 (2013-01-17), XP055958899, Retrieved from the Internet <URL:https://web.archive.org/web/20130117054251/https://www.ithaka-journal.net/herstellung-von-pflanzenkohle-mittels-pyreg-technologie> [retrieved on 20220908]
- KUPRYIANCHYK DARYA ET AL: "Sorption of hydrophobic organic compounds to a diverse suite of carbonaceous materials with emphasis on biochar", CHEMOSPHERE, PERGAMON PRESS, OXFORD, GB, vol. 144, 28 September 2015 (2015-09-28), pages 879 - 887, XP029360985, ISSN: 0045-6535, DOI: 10.1016/J.CHEMOSPHERE.2015.09.055
- ADEODUN SIMILADE A. ET AL: "Optimisation of Biochar Yield from Sorted Wood Wastes as Sustainable Alternatives to Burning to Ash", ECOLOGICAL CHEMISTRY AND ENGINEERING S, vol. 29, no. 1, 1 March 2022 (2022-03-01), pages 15 - 26, XP093147482, ISSN: 2084-4549, DOI: 10.2478/eces-2022-0003
- LANGE SÉBASTIEN F ET AL: "Physicochemical Properties of 43 Biochars A Co-Production of Université Laval and GECA Environnement Production Team", 1 January 2018 (2018-01-01), XP093147485, Retrieved from the Internet <URL:https://materiauxrenouvelables.ulaval.ca/wp-content/uploads/2018/06/Biochar-properties-GECA-U-Laval-EN-2.pdf> [retrieved on 20240403], DOI: 10.13140/rg.2.2.25450.41924

## Beschreibung

Die vorliegende Erfindung betrifft ein Verfahren zur Herstellung von Aktivkohle.

KUPRYIANCHYK DARYA ET AL: "Sorption of hydrophobic organic compounds to a diverse suite of carbonaceous materials with emphasis on biochar",CHEMOSPHERE, PERGAMON PRESS, OXFORD, GB, Bd. 144, 28. September 2015 (2015-09-28), Seiten 879-887,ISSN: 0045-6535, DOI: 10.1016/J.CHEMOSPHERE.2015.09.055 befasst sich mit der Sorption von hydrophoben organischen Verbindungen an verschiedene kohlenstoffhaltige Materialien unter besonderer Berücksichtigung von Biokohle.

Die Aufgabe der vorliegenden Erfindung bestand darin, ein alternatives Verfahren zur Herstellung von Pflanzenkohle bereitzustellen. Insbesondere war es eine Aufgabe, ein Verfahren zur Herstellung von Pflanzenkohle mit sehr geringen Schadstoffanteilen zur Verfügung zu stellen, insbesondere Pflanzenkohle in einer Form herzustellen, welche eine Weiterverarbeitung in hochwertige Aktivkohle erleichtert.

Diese Aufgabe wird erfindungsgemäss gelöst durch das Verfahren nach Anspruch 1. Das erfindungsgemässe Verfahren ist ein Verfahren zur Herstellung von Aktivkohle Das Verfahren umfasst die Schritte
- Bereitstellung des Ausgangsmaterials in Form von naturreinem Holz,
- Zerkleinerung des Ausgangsmaterials in Stücke von maximal 45 mm Kantenlänge,
- Trocknung des Ausgangsmaterials auf einen Wassergehalt von maximal 20 Gewichtsprozent,
- Pyrolyse der getrockneten Stücke des Ausgangsmaterials in einem Reaktor unter Sauerstoffabschluss zur Erzeugung Pflanzenkohle,
- Ablöschen der Pflanzenkohle nach der Pyrolyse durch Zugabe von Wasser.

Die Pyrolyse wird im Temperaturbereich 720°C bis 800°C durchgeführt. Die Verweildauer der Holzstücke, resp. der Pflanzenkohlenstück, im Reaktor beträgt minimal 60 Minuten. Insbesondere liegt die Verweildauer im Reaktor zwischen 60 und 80 Minuten.

Der Schritt des Zerkleinerns des Ausgangsmaterials kann beispielsweise maschinell erfolgen und vor der Trocknung des Ausgangsmaterials erfolgen, da die Trocknung bei einer Stückigkeit von max. 45 mm effizient möglich ist.

Die Erfinder haben erkannt, dass die so hergestellte Pflanzenkohle besonders gut als Rohaktivkohle geeignet ist. In der so hergestellten Pflanzkohle kann eine Oberfläche von 390 m2/g und mehr erreicht werden. Diese Oberfläche kann beispielsweise in einer Messung nach dem BET-Verfahren bestimmt werden. In diesem nach den Namen der Entwickler des BET-Modells (Brunauer, Emmett, Teller) benannten Analyseverfahren wird die Oberfläche poröser Festkörper, in diesem Fall der Pflanzenkohle, mittels Gasadsorption bestimmt.

Weiter kann nach diesem Verfahren eine Pflanzenkohle mit einem Kohlenstoffgehalt von grösser als 85 Gewichtsprozent erhalten werden. Eine Schüttdichte der Pflanzenkohle von grösser als 380 kg/m3 ist erreichbar.

Varianten des Verfahrens ergeben sich aus den Merkmalen der abhängigen Patentansprüche 2 bis 6.

In einer Varianten des Verfahrens ist das Ausgangsmaterial naturreines Restholz aus der Forstwirtschaft und/oder der Landschaftspflege.

Die Zusammensetzung des Ausgangsmaterials umfasst 35-45 Gewichtsprozent Nadelholz und 55-65 Gewichtsprozent Hartlaubholz. Beispielsweise kann das Ausgangsmaterial 40 Gewichtsprozent Nadelholz und 60 Gewichtsprozent Hartlaubholz umfassen.

In einer Varianten des Verfahrens erfolgt der Schritt der Trocknung als thermische Trocknung unter Ausnützung der Abwärme aus dem Schritt der Pyrolyse. Diese Variante führt zu einem besonders energieeffizienten Verfahren.

In einer Variante wird der Trocknungsvorgang so gestaltet, dass der Wassergehalt des Ausgangsmaterials nach der Trocknung und vor der Pyrolyse im Bereich 12 bis 20 Gewichtsprozent liegt.

In einer Varianten des Verfahrens erfolgt das Ablöschen direkt nach der Pyrolyse. Dabei wird das Ablöschen derart durchgeführt, dass ein Wassergehalt der Pflanzenkohle auf maximal 30 Gewichtsprozent beschränkt ist. Insbesondere wird das Ablöschen derart durchgeführt, dass der Wassergehalt der Pflanzenkohle im Bereich 10 bis 30 Gewichtsprozent liegt.

Als letzter Schritt wird die Pflanzenkohle auf eine Korngrösse von maximal 3 mm gemahlen. Die Pflanzenkohle kann insbesondere auf eine Korngrösse von kleiner als 1 mm gemahlen werden.

Das Mahlen auf eine kleine Korngrösse, bis hinunter zu Pflanzenkohlenstaub ist Schritt, welcher als Vorbereitung zur Herstellung von Aktivkohle geeignet ist. Das entstehende Produkt kann also als Rohaktivkohle bezeichnet werden.

Optional kann die Pflanzenkohle mit einem Aktivator konditioniert werden, wobei der Aktivator eine Substanz ist, welcher die Aktivierung fördert, wenn die Pflanzenkohle in einem weiteren Schritt zu Aktivkohle weiterverarbeitet wird. Dafür kommt entmineralisiertes Wasser (Aqua PH5) in Frage. Das Destillierte Wasser muss noch in der Glühphase auf die PK gedüst werden. Während der Verdampfung findet eine Teilung der Poren statt, was eine grössere Oberfläche mit sich bringt.

Herstellung von Aktivkohle wird die gemahlene Pflanzenkohle in einem weiteren Schritt in einem Wirbelschichtreaktor oxydisch aktiviert.

Bei dem Schritt der Aktivierung werden die schon vorher in der Pflanzenkohle vorhandenen Poren vergrössert und die gesamte Oberfläche wird noch weiter vergrössert. Die Erfinder haben erkannt, dass die Aktivierung in einem Wirbelschichtreaktor besonders geeignet ist, um Rohaktivkohle zu verarbeiten, welche gemäss dem erfindungsgemässen Verfahren zur Herstellung von Pflanzenkohle produziert wurde.

Durch nach dem Schritt der Aktivierung wird Aktivkohle erhalten, welche eine Oberfläche von über 780 m²/g erreicht, wobei der Anteil von Mikroporen an der Oberfläche über 440 m²/g liegt. Die Oberfläche kann beispielsweise mit der BET-Methode bestimmt werden.

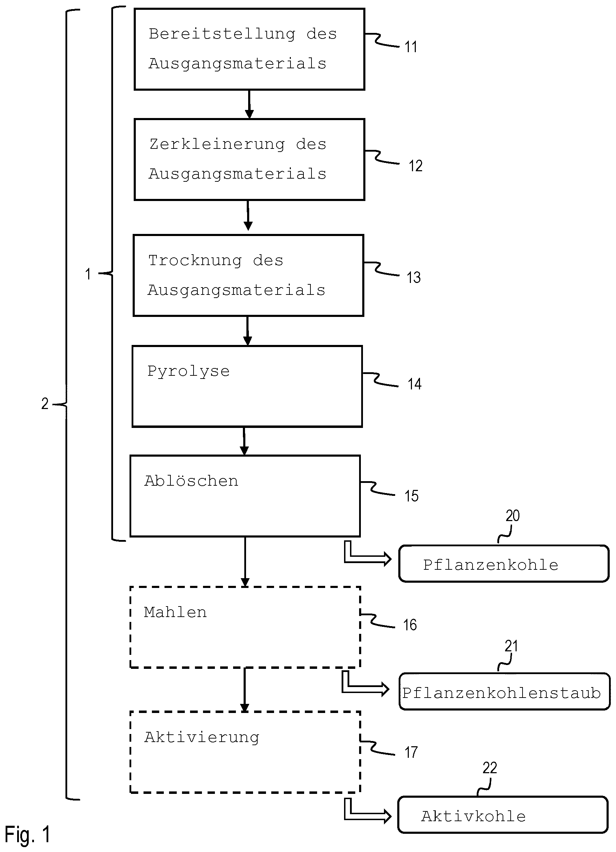

Ausführungsbeispiele der vorliegenden Erfindung werden nachstehend anhand von Figuren noch näher erläutert. Es zeigen
Fig. 1 ein Flussdiagramm mit einer Übersicht über Verfahrensschritte und Produkte.

In Figur 1 sind schematisch die Verfahrensschritte 11, 12, 13, 14, 15 des erfindungsgemässen Verfahrens 1 zur Herstellung von Pflanzenkohle gezeigt. Das Produkt nach dem Schritt 15 des Ablöschens durch Zugabe von Wasser ist die Pflanzenkohle 20 mit dem gewünschten Wassergehalt. Der optionale weitere Schritt des Mahlens, gemäss einer Variante des Verfahrens führt als Produkt zu Pflanzenkohlenstaub 21. Daran anschliessend kann der Schritt der Aktivierung angehängt werden, welcher zum Produkt Aktivkohle 22 führt.

## Patentansprüche

1. Verfahren (2 ) zur Herstellung von Aktivkohle (22) umfassend die Schritte
- Bereitstellung (11) des Ausgangsmaterials in Form von naturreinem Holz, wobei die Zusammensetzung des Ausgangsmaterials 35-45 Gewichtsprozent Nadelholz und 55-65 Gewichtsprozent Hartlaubholz umfasst,
- Zerkleinerung (12) des Ausgangsmaterials in Stücke von maximal 45 mm Kantenlänge,
- Trocknung (13) des Ausgangsmaterials auf einen Wassergehalt von maximal 20 Gewichtsprozent,
- Pyrolyse (14) der getrockneten Stücke des Ausgangsmaterials in einem Reaktor unter Sauerstoffabschluss zur Erzeugung Pflanzenkohle,
- Ablöschen (15) der Pflanzenkohle nach der Pyrolyse durch Zugabe von Wasser,
wobei die Pyrolyse im Temperaturbereich 720°C bis 800°C durchgeführt wird und wobei die Verweildauer im Reaktor minimal 60 Minuten beträgt, insbesondere wobei die Verweildauer im Reaktor zwischen 60 und 80 Minuten liegt, wobei als letzter Schritt (16) die Pflanzenkohle auf eine Korngrösse von maximal 3 mm, insbesondere kleiner als 1 mm, gemahlen wird, wobei die gemahlene Pflanzenkohle in einem weiteren Schritt (17) in einem Wirbelschichtreaktor oxydisch aktiviert wird.

2. Verfahren nach Anspruch 1, wobei das Ausgangsmaterial naturreines Restholz aus der Forstwirtschaft und/oder der Landschaftspflege ist.

3. Verfahren nach einem der Ansprüche 1 oder 2, wobei das Ausgangsmaterial 40 Gewichtsprozent Nadelholz und 60 Gewichtsprozent Hartlaubholz umfasst.

4. Verfahren nach einem der Ansprüche 1 bis 3, wobei der Schritt der Trocknung als thermische Trocknung unter Ausnützung der Abwärme aus dem Schritt der Pyrolyse erfolgt.

5. Verfahren nach einem der Ansprüche 1 bis 4, wobei der Wassergehalt des Ausgangsmaterials nach der Trocknung und vor der Pyrolyse im Bereich 12 bis 20 Gewichtsprozent liegt.

6. Verfahren nach einem der Ansprüche 1 bis 5, wobei das Ablöschen direkt nach der Pyrolyse erfolgt und derart durchgeführt wird, dass ein Wassergehalt der Pflanzenkohle auf maximal 30 Gewichtsprozent beschränkt ist, insbesondere wobei der Wassergehalt der Pflanzenkohle im Bereich 10 bis 30 Gewichtsprozent liegt.

## Claims

1. Method (2) for preparing activated carbon (22), the method comprising the steps of
- providing (11) the starting material in the form of pure natural wood, wherein the composition of the starting material comprises 35-45% by weight of coniferous wood and
55-65% by weight of hardwood,
- comminution (12) of the starting material into pieces of maximum edge length of 45 mm,
- drying (13) of the starting material to a water content of maximum 20% by weight,
- pyrolysis (14) of the dried pieces of the starting material in a reactor under exclusion of oxygen to produce biochar,
- quenching (15) of the biochar after the pyrolysis by addition of water,
wherein the pyrolysis is carried out in the temperature range of 720°C to 800°C and wherein the residence time in the reactor is at least 60 minutes, in particular wherein the residence time in the reactor is between 60 and 80 minutes, wherein, as last step (16), the biochar is grinded to a particle size of at most 3 mm, in particular less than 1 mm, wherein, in a further step (17), the ground biochar is oxidically activated in a fluidized bed reactor.

2. Method according to claim 1, wherein the starting material is pure natural wood residue from forestry and/or landscape maintenance.

3. Method according to one of claims 1 or 2, wherein the starting material comprises 40% by weight of coniferous wood and 60% by weight of hardwood.

4. Method according to one of claims 1 to 3, wherein the step of drying is carried out as thermal drying by utilizing the waste heat from the step of pyrolysis.

5. Method according to one of claims 1 to 4, wherein the water content of the starting material after the drying and before the pyrolysis is in the range of 12 to 20% by weight.

6. Method according to one of claims 1 to 5, wherein the quenching is carried out directly after the pyrolysis and such that a water content of the biochar is limited to a maximum of 30% by weight, in particular wherein the water content of the biochar is in the range of 10 to 30% by weight.

## Revendications

1. Procédé (2) de préparation de charbon actif (22), comprenant les étapes de :
- mise à disposition (11) du matériau de départ sous la forme de bois naturel pur, la composition du matériau de départ comprenant 35 à 45 % en poids de bois de résineux et 55 à 65 % en poids de bois de feuillus dur,
- broyage (12) du matériau de départ en morceaux de maximum 45 mm de côté,
- séchage (13) du matériau de départ jusqu'à obtenir une teneur en eau de 20 % en poids maximum,
- pyrolyse (14) des morceaux séchés du matériau de départ, dans un réacteur sous occlusion d'oxygène, pour générer du charbon végétal,
- mouillage (15) du charbon végétal après la pyrolyse, par ajout d'eau ;
dans lequel la pyrolyse est réalisée dans une plage de températures de 720 °C à 800 °C, et dans lequel la durée de séjour dans le réacteur est au minimum de 60 minutes, en particulier dans lequel la durée de séjour dans le réacteur est comprise entre 60 et 80 minutes, dans lequel, en tant que dernière étape (16), le charbon végétal est moulu à une taille de particules de 3 mm maximum, en particulier à une taille inférieure à 1 mm, dans lequel le charbon végétal moulu, lors d'une étape ultérieure (17), est activé par oxydation dans un réacteur à lit fluidisé.

2. Procédé selon la revendication 1, dans lequel le matériau de départ est du déchet de bois naturel pur issu de la sylviculture et/ou de l'entretien des sites naturels.

3. Procédé selon l'une des revendications 1 ou 2, dans lequel le matériau de départ comprend 40 % en poids de bois de résineux et 60 % en poids de bois de feuillus dur.

4. Procédé selon l'une des revendications 1 à 3, dans lequel l'étape de séchage est réalisée en tant que séchage thermique en exploitant la chaleur résiduelle de l'étape de pyrolyse.

5. Procédé selon l'une des revendications 1 à 4, dans lequel la teneur en eau du matériau de départ après le séchage et avant la pyrolyse se situe dans la plage de 12 à 20 % en poids.

6. Procédé selon l'une des revendications 1 à 5, dans lequel le mouillage se fait directement après la pyrolyse, et est réalisé de façon telle qu'une teneur en eau du charbon végétal est limitée à un maximum de 30 % en poids, en particulier dans lequel la teneur en eau du charbon végétal se situe dans la plage de 10 à 30 % en poids.
